# EUROPEAN PATENT APPLICATION

(11) **EP 3 219 423 A1**
(43) Date of publication of application: **20.09.2017**
(21) Application number: 17161484.5
(22) Date of filing: 17.03.2017
(51) Int. Cl.: B23B 49/02

(54) **TURBINE ENGINE COMPONENT REPLACEMENT**

(30) Priority: 17.03.2016 US 201615073193
(71) Applicant: United Technologies Corporation, Farmington, CT 06032 (US)
(72) Inventor: WILBER, John E., East Hampton, CT Connecticut 06424 (US); ALOMARI, Walid, Windsor Locks, CT Connecticut 06096 (US)
(74) Representative: Gittins, Alex Michael

(57) **Abstract**

Aspects of the disclosure are directed to a toolset (200) comprising: a face locator plate (230) configured to seat a component (224), and a location transfer assembly (218) configured to obtain and retain at least one parameter associated with a rivet hole (304) of the component (224) to project said at least one parameter from said toolset (200) onto a replacement component.

## Description

### BACKGROUND

Gas turbine engines, such as those which power aircraft and industrial equipment, employ a compressor to compress air which is drawn into the engine and a turbine to capture energy associated with the combustion of a fuel-air mixture which is exhausted from the engine's combustor. As the engine is subject to use over time, various components of the engine may need to be refurbished or replaced in order to maintain engine performance and operability. For example, component (e.g., material) fatigue may present a need to replace a (first instance of a) component with a replacement (e.g., second instance of the) component. Still further, changes to manufacturing processes or component materials that are used may dictate replacing a legacy version of a component with an updated version of the component.

Replacement of a component on an aircraft engine, particularly aircraft engines that are already in service, present a number of unique challenges. For example, to the extent that a first instance of a component that is to be replaced has one or more rivet holes for mounting on an engine module (e.g., an engine case), it is imperative that rivet holes of the replacement component are machined so as to properly align with the engine module. Otherwise, the replacement component or the engine module may be subject to unnecessary/elevated stress; in some cases if the replacement component fails to align with the engine module the two might not properly mate with one another which may result in the generation of scrap/waste (e.g., the replacement component may need to be discarded). Placement of the replacement component on the engine module may also require labor intensive inspection/testing activities. During component replacement activities, an aircraft may be suspended from service, which may result in a loss of revenue. Accordingly, what is needed is an improved ability to provision for a replacement component of an engine in order to enhance the operability and reliability of the engine.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a toolset comprising: a face locator plate configured to seat a component, and a location transfer assembly configured to obtain and retain at least one parameter associated with a rivet hole of the component to project said at least one parameter from said toolset onto a replacement component.

In some embodiments, the at least one parameter includes at least one of a location of the rivet hole or a dimension of the rivet hole.

In some embodiments, the toolset further comprises a main fixture base coupled to the face locator plate, and a riser plate coupled to the main fixture base and the location transfer assembly, where the face locator plate is oriented so as to substantially align an axis of the rivet hole with a horizontal orientation of the main fixture base.

In some embodiments, the toolset further comprises a location nest configured to be selectively coupled to the face locator plate to constrain the component.

In some embodiments, the toolset further comprises at least one clamping mechanism configured to couple the face locator plate and the location nest.

In some embodiments, the toolset further comprises a riser plate, where the location transfer assembly includes: a bushing plate formed in a cavity of the riser plate, a bushing clamp body that is configured to be selectively engaged with a first surface of the bushing plate, and a lock nut that is configured to be selectively engaged with a second surface of the bushing plate.

In some embodiments, the bushing clamp body is configured to float within the cavity when the lock nut is loose to accommodate a variation in the at least one parameter.

In some embodiments, the variation in the at least one parameter includes an axial centerline associated with the rivet hole.

In some embodiments, the location transfer assembly includes a locator pin that is configured to align with the axial centerline of the rivet hole.

In some embodiments, the locator pin includes a tapered profile that corresponds to a tolerance band in terms of a specified dimension of the rivet hole.

Aspects of the disclosure are directed to a method for replacing a component with a replacement component, the method comprising: installing the component on a toolset, positioning a first locator pin of the toolset in-line with a first rivet hole of the component, tightening a first lock nut of the toolset to retain a first position of the first rivet hole of the component, removing the first locator pin from the toolset, removing the component from the toolset, installing the replacement component on the toolset, and forming a first rivet hole in the replacement component via the toolset based on the retained first position of the first rivet hole of the component.

In some embodiments, installing the component on the toolset includes installing the component on a face locator plate of the toolset, and the method further comprises coupling a location nest to the face locator plate to constrain the component in a first fixed position.

In some embodiments, installing the replacement component on the toolset includes installing the replacement component on the face locator plate and coupling the location nest to the face locator plate to constrain the replacement component in a second fixed position.

In some embodiments, the method further comprises loosening the first lock nut prior to positioning the first locator pin.

In some embodiments, the forming of the first rivet hole in the replacement component includes a drilling of the first rivet hole in the replacement component.

In some embodiments, the method further comprises removing the component from an engine prior to installing the component on the toolset.

In some embodiments, the method further comprises installing the replacement component onto an engine subsequent to forming the first rivet hole in the replacement component.

In some embodiments, the method further comprises applying a finish to the replacement component subsequent to forming the first rivet hole in the replacement component.

In some embodiments, the finish includes at least one of deburring the replacement component or applying a thermal barrier coating to the replacement component.

In some embodiments, the method further comprises positioning a second locator pin of the toolset in-line with a second rivet hole of the component, tightening a second lock nut of the toolset to retain a second position of the second rivet hole of the component, removing the second locator pin from the toolset, and forming a second rivet hole in the replacement component via the toolset based on the retained second position of the second rivet hole of the component.

### BRIEF DESCRIPTION OF THE DRAWINGS

The present disclosure is illustrated by way of example and not limited in the accompanying figures in which like reference numerals indicate similar elements. The drawings are not necessarily drawn to scale unless specifically indicated otherwise.
FIG. 1 is a side cutaway illustration of a geared turbine engine.
FIG. 2 illustrates a toolset for mapping parameters associated with a first instance of a component to a second instance of the component.
FIG. 3 illustrates a location transfer assembly in accordance with aspects of this disclosure.
FIG. 4 illustrates a flowchart of an exemplary method for mapping parameters associated with a first instance of a component to a second instance of the component.
FIG. 5 illustrates a tapered profile of a location pin in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems, and methods are described for replacing a first instance of a component of an engine with a second instance of the component. In some embodiments, a toolset may be configured to determine/locate one or more features associated with the first instance of the component. For example, parameters (e.g., location, size, etc.) associated with one or more rivet holes may be obtained/retained by the toolset. Those parameters may then be transferred/projected from the toolset onto the second instance of the component in order to ensure that the second instance of the component is compatible with the first instance of the component.

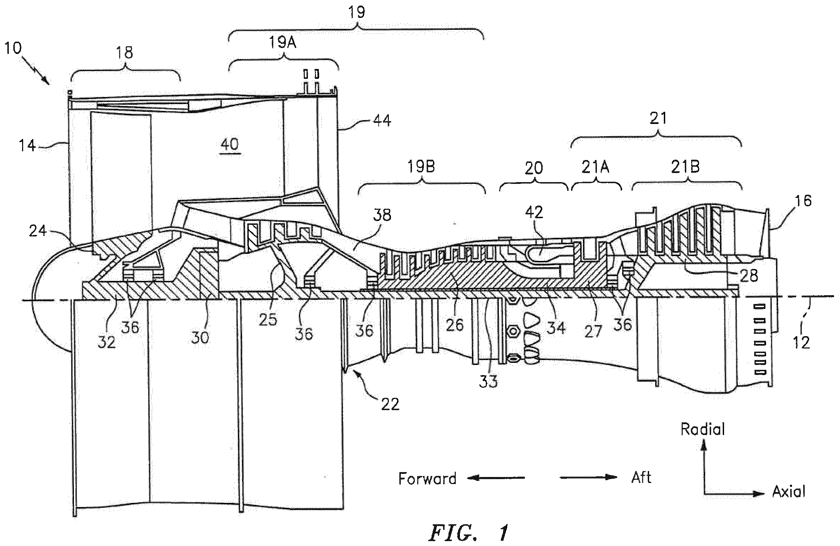

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21 A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines.

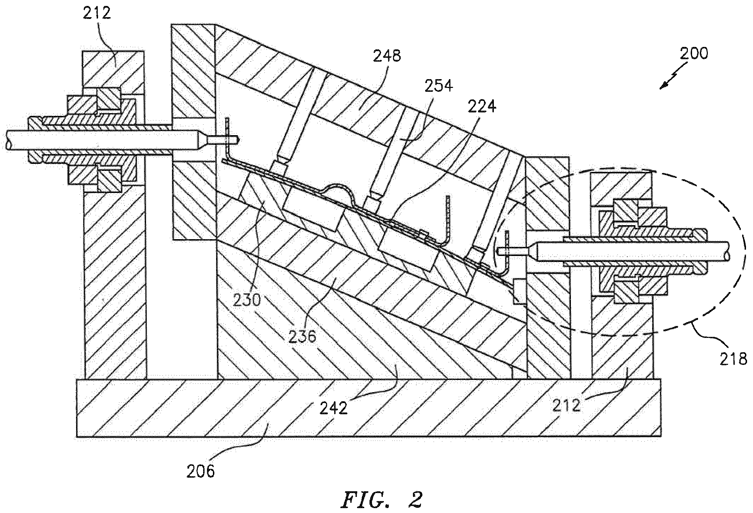

Referring now to FIG. 2, a toolset 200 is shown. The toolset 200 may be used to replace a first instance of a component of an engine (e.g., the engine 10) with a second instance of the component. As an illustrative example, a component associated with a riveted construction component of the turbine section 21 may be replaced using the toolset 200 shown in FIG. 2.

The toolset 200 may include a main fixture base 206. The main fixture base 206 may serve as a reference and support for the remainder of the toolset 200. The main fixture base 206 may be precision-ground to a smooth surface/finish. In some embodiments, the main fixture base 206 may have a thickness within a range of 0.75 inches to 1 inch (approximately 1.9 centimeters to 2.5 centimeters). The main fixture base 206 may be made of one or more materials, such as for example steel. The main fixture base 206 may rest upon a table/workstation (not shown) to facilitate component manufacturing (e.g., machining) activities as described further below.

The toolset 200 may include one or more risers/riser plates 212 coupled to the main fixture base 206. The riser plates 212 may be oriented in a direction that is substantially perpendicular to the orientation of the main fixture base 206 as shown in FIG. 2.

A given riser plate 212 may support and present (e.g., articulate) a location transfer assembly 218 to a component 224.

The component 224 may include a first instance of a component that is being replaced (e.g., may be a component that was removed from a module of an engine) or a second instance of the component that is serving as a replacement for the first instance of the component as is described further below. In this respect, a replacement component may include a completely new instance/version of the component or the replacement component may include the component following application of a refurbishment/repair procedure. The number of riser plates 212 and corresponding location transfer assemblies 218 that are included in the toolset 200 may be equal to a number of rivet holes that are included in the component 224. For example, a given pairing of a riser plate 212 and location transfer assembly 218 may be dedicated to a particular rivet hole.

The toolset 200 may include a face locator plate 230. The face locator plate 230 may address/receive/seat the component 224. The face locator plate 230 may be supported by a subplate 236 and the subplate 236 may be supported by a wedge 242 that may be coupled to the main fixture base 206. Referring to FIGS. 2-3, one or more dimensions of the face locator plate 230, the subplate 236, or the wedge 242 may be selected such that the face locator plate 230 causes an axis 'R_{A}' of a rivet hole 304 located (or to be located) in the component 224 to be substantially parallel to the (horizontal) orientation of the main fixture base 206.

Referring to FIG. 2, once the component 224 is installed on the face locator plate 230, a location bar/nest 248 may be placed on top of the face locator plate 230 in order to secure the component 224 in place. For example, the face locator plate 230 and the location nest 248 may apply pressure or a clamping force in a sufficient amount (e.g., in an amount greater than a threshold) in order to hold/constrain the component 224 in a fixed position. One or more clamping mechanisms (e.g., swivel screws) 254 may be used to selectively couple or decouple the face locator plate 230 and the location nest 248.

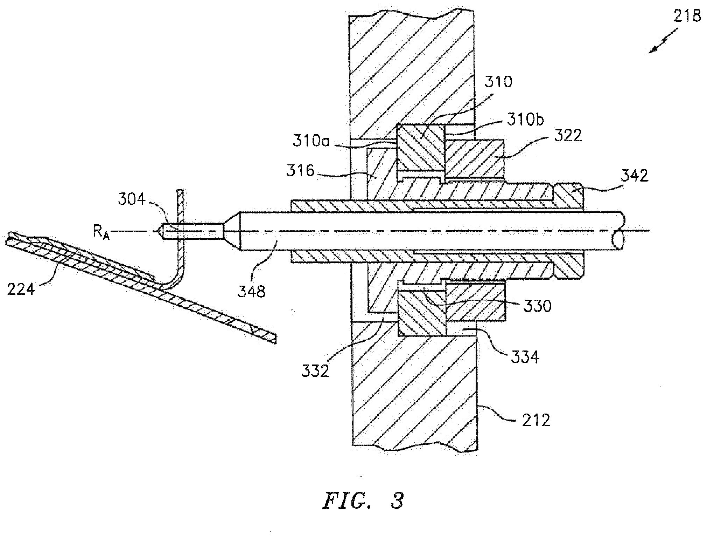

Referring to FIG. 3, the riser plate 212 may be oriented substantially perpendicular to the rivet hole 304 axis R_{A}. One or more bushing plates 310 may be located within corresponding recesses/cavities formed in the riser plate 212. A bushing plate 310 may be located axially/horizontally between a bushing clamp body 316 and a lock nut 322. The surfaces 310a and 310b of a bushing plate 310 that interface to the bushing clamp body 316 and the lock nut 322, respectively, may be precision-ground to a smooth finish in order to provide for a parallel locking between (1) the bushing plate 310, and (2) the bushing clamp body 316 and the lock nut 322.

As shown in FIG. 3, a (vertical) gap 330 may be established between a bushing plate 310 and a bushing clamp body 316. The bushing plate 310 may be fixed within the riser plate 212 and may be located to a theoretical position of a first component position about the axis R_{A} and the gap 330. The gap 330 may represent a tolerance for locating the rivet hole 304 in a first instance of the component 224 (where the first instance represents the component 224 that is being replaced). In this respect, an allowable size/dimension of the gap 330 (or, analogously, an allowable size/dimension of the bushing plate 310 and the bushing clamp body 316) may be selected to accommodate a specified tolerance in the location of the rivet hole 304.

A gap 332 may be formed between the bushing clamp body 316 and the riser plate 212 and a gap 334 may be formed between the lock nut 322 and the riser plate 212. The gaps 332 and 334 may be greater than the gap 330 in terms of size/dimension in order to allow the gap 330 to function as a metering device.

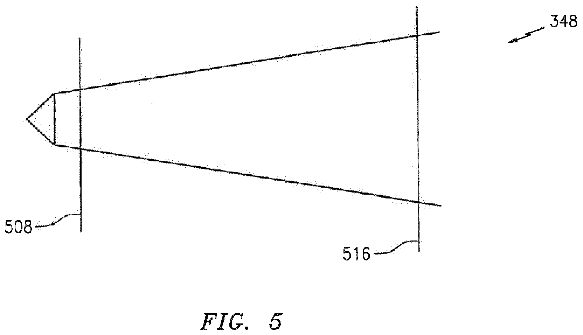

A drill bushing 342 and associated location pin 348 may be inserted into the bushing clamp body 316 and may be used to locate the rivet hole 304 as is described further below. The location pin 348 may include a tapered profile, such that the pin 348 may be narrowest at its leftmost portion/end as shown in FIG. 3. For example, and referring briefly to FIG. 5, the profile of the taper associated with the pin 348 may be selected to accommodate a tolerance band associated with the rivet hole 304 in terms of a specified/allowed size/dimension of the rivet hole 304, where the tolerance is reflected via a minimum allowed rivet hole dimension as represented by line 508 and a maximum allowed rivet hole dimension as represented by line 516.

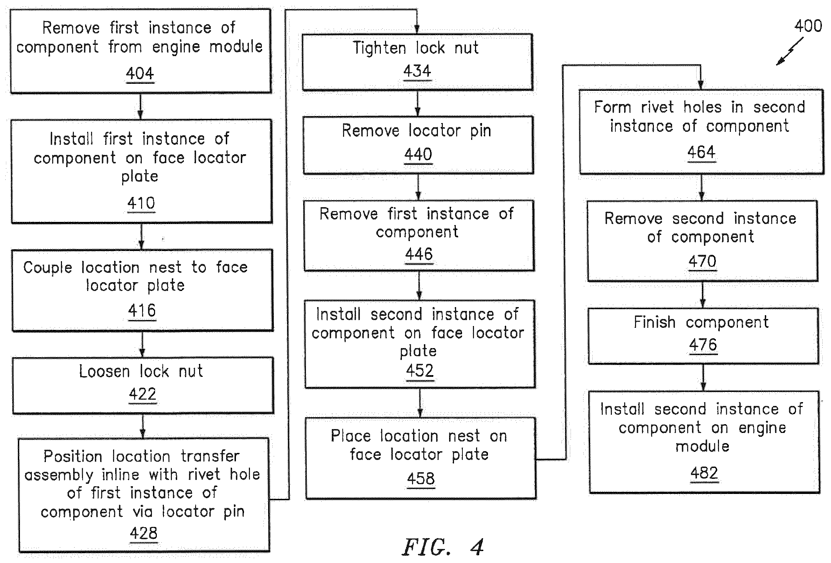

Referring now to FIG. 4, a flowchart of a method 400 for replacing a first instance of a component (e.g., the component 224) with a second instance of the component is shown. The method 400 is described as being applied in connection with the toolset 200 of FIG. 2 for the sake of illustrative convenience. One skilled in the art would appreciate that the method 400 may be adapted to accommodate other types/configurations of toolsets.

In block 404, the first instance of the component may be removed from an engine module. In some embodiments, the engine module may include a composite structure.

In block 410, the first instance of the component may be installed on a face locator plate 230.

In block 416, a location nest 248 may be coupled to the face locator plate 230 in order to retain the first instance of the component within the toolset 200. As part of block 416, one or more attachment mechanisms 254 may be secured/tightened.

In block 422, a lock nut 322 associated with a location transfer assembly 218 may be loosened to allow a bushing clamp body 316 freedom of movement in relation to a gap 330.

In block 428, the location transfer assembly 218 may be positioned in-line with a rivet hole 304 of the first instance of the component 224 via a locator pin 348. The locator pin 348 may be inserted into the rivet hole 304 until it can be pushed in no further (e.g., within the tolerance band reflected by lines 508 and 516 in FIG. 5).

In block 434, the lock nut 322 may be tightened to secure the bushing clamp body 316 to the bushing plate 310.

The operations associated with blocks 422-434 may be repeated for each rivet hole 304 associated with the first instance of the component. Once these operations 422-434 are complete, the configuration of the rivet holes associated with the first instance of the component have been replicated on the toolset 200.

In block 440, the locator pin(s) 348 may be removed from their respective location transfer assemblies 218.

In block 446, the first instance of the component may be removed from the toolset 200. For example, as part of block 446 one or more attachment mechanisms 254 may be unsecured/loosened and the location nest 248 may be removed/decoupled from the face locator plate 230.

In block 452, the second instance of the component may be installed on the face locator plate 230.

In block 458, the location nest 248 may be coupled to the face locator plate 230 in order to retain the second instance of the component within the toolset 200. As part of block 458, the one or more attachment mechanisms 254 may be secured/tightened.

In block 464, one or more rivet holes 304 may be formed in the second instance of the component. As an example, a rivet hole 304 may be formed by applying a drill that is inserted/seated by the bushing clamp body 316 (where the locator pin 348 was previously located at the conclusion of block 434 described above). In this manner, the precise location of the rivet holes 304 in the first instance of the component may be replicated in the second instance of the component.

In block 470, the second instance of the component may be removed from the toolset 200. For example, as part of block 470 one or more attachment mechanisms 254 may be unsecured/loosened and the location nest 248 may be removed/decoupled from the face locator plate 230.

In block 476, one or more finishing techniques may be applied to the second instance of the component. For example, a deburring tool may be used to remove any excess material that may be present on the second instance of the component. A thermal barrier coating may be applied to the second instance of the component as part of block 476.

In block 482, the second instance of the component may be installed on the engine module.

Technical effects and benefits of this disclosure include a toolset that is configured to obtain and retain one or more parameters associated with a first instance of a component and project/replicate/transfer those parameters to a second instance of the component. In this manner, the second instance of the component may be manufactured to accommodate an application environment (e.g., an engine module) with a high degree of precision/accuracy. Still further, by allowing for variability/tolerance within the toolset, the toolset may accommodate a wide range of parameter values. In this manner, rivet hole misalignment errors may be minimized or even avoided. While various examples described herein relate to the location and size/dimension of a rivet hole, one skilled in the art would appreciate that various other features associated with a component may be retained and projected using a toolset similar to the one described herein.

Aspects of the disclosure have been described in terms of illustrative embodiments thereof Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A toolset (200) comprising:
a face locator plate (230) configured to seat a component (224); and
a location transfer assembly (218) configured to obtain and retain at least one parameter associated with a rivet hole (304) of the component (224) to project said at least one parameter from said toolset (200) onto a replacement component.

2. The toolset of claim 1, wherein the at least one parameter includes at least one of a location of the rivet hole (304) or a dimension of the rivet hole (304).

3. The toolset of claim 1 or 2, further comprising:
a main fixture base (206) coupled to the face locator plate; and
a riser plate (212) coupled to the main fixture base (206) and the location transfer assembly (218),
wherein the face locator plate (230) is oriented so as to substantially align an axis (R_{A}) of the rivet hole (304) with a horizontal orientation of the main fixture base (206).

4. The toolset of any preceding claim, further comprising:
a location nest (248) configured to be selectively coupled to the face locator plate (230) to constrain the component (224); and, optionally,
at least one clamping mechanism (254) configured to couple the face locator plate (230) and the location nest (248).

5. The toolset of any preceding claim, further comprising:
a or the riser plate (212);
wherein the location transfer assembly (218) includes:
a bushing plate (310) formed in a cavity of the riser plate (212);
a bushing clamp body (316) that is configured to be selectively engaged with a first surface (310a) of the bushing plate (310); and
a lock nut (322) that is configured to be selectively engaged with a second surface (310b) of the bushing plate (310).

6. The toolset of claim 5, wherein the bushing clamp body (316) is configured to float within the cavity when the lock nut (322) is loose to accommodate a variation in the at least one parameter.

7. The toolset of claim 6, wherein the variation in the at least one parameter includes an axial centerline associated with the rivet hole (304);
wherein, optionally, the location transfer assembly (218) includes a locator pin (348) that is configured to align with the axial centerline of the rivet hole (304), wherein, optionally, the locator pin (348) includes a tapered profile that corresponds to a tolerance band in terms of a specified dimension of the rivet hole (304).

8. A method for replacing a component (224) with a replacement component, the method comprising:
installing the component (224) on a toolset (200);
positioning a first locator pin (348) of the toolset (200) in-line with a first rivet hole (304) of the component (224);
tightening a first lock nut (322) of the toolset (200) to retain a first position of the first rivet hole (304) of the component (224);
removing the first locator pin (348) from the toolset (200);
removing the component (224) from the toolset (200);
installing the replacement component on the toolset (200); and
forming a first rivet hole (304) in the replacement component via the toolset (200) based on the retained first position of the first rivet hole (304) of the component (224).

9. The method of claim 8, wherein installing the component (224) on the toolset (200) includes installing the component (224) on a face locator plate (230) of the toolset (200), the method further comprising:
coupling a location nest (248) to the face locator plate (230) to constrain the component (224) in a first fixed position;
wherein, optionally, installing the replacement component on the toolset (200) includes installing the replacement component on the face locator plate (230) and coupling the location nest (248) to the face locator plate (230) to constrain the replacement component in a second fixed position.

10. The method of claim 8 or 9, further comprising:
loosening the first lock nut (322) prior to positioning the first locator pin (348).

11. The method of any of claims 8 to 10, wherein the forming of the first rivet hole (304) in the replacement component includes a drilling of the first rivet hole (304) in the replacement component.

12. The method of any of claims 8 to 11, further comprising:
removing the component (224) from an engine (10) prior to installing the component (224) on the toolset (200).

13. The method of any of claims 8 to 12, further comprising:
installing the replacement component onto an or the engine (10) subsequent to forming the first rivet hole (304) in the replacement component.

14. The method of any of claims 8 to 13, further comprising:
applying a finish to the replacement component subsequent to forming the first rivet hole (304) in the replacement component;
wherein, optionally, the finish includes at least one of deburring the replacement component or applying a thermal barrier coating to the replacement component.

15. The method of any of claims 8 to 14, further comprising:
positioning a second locator pin (348) of the toolset (200) in-line with a second rivet hole (304) of the component (224);
tightening a second lock nut (322) of the toolset (200) to retain a second position of the second rivet hole (304) of the component;
removing the second locator pin (348) from the toolset (200); and
forming a second rivet hole (304) in the replacement component via the toolset (200) based on the retained second position of the second rivet hole (304) of the component (224).
